# FASCICULE DE BREVET EUROPEEN

(11) **EP 0 627 053 B1**
(45) Date de publication et mention de la délivrance du brevet: **16.07.1997**
(21) Numéro de dépôt: 93905426.8
(22) Date de dépôt: 25.02.1993
(51) Int. Cl.: F16H 15/20

(54) **MECANISME POUR FAIRE VARIER PROGRESSIVEMENT ET SANS A COUPS LA VITESSE DE ROTATION ENTRE UN ORGANE MOTEUR ET UN ORGANE RECEPTEUR**
MECHANISMUS ZUR STUFENLOSEN VERÄNDERUNG EINER DREHGESCHWINDIGKEIT ZWISCHEN EINEM ANTRIEB UND EINEM ABTRIEB
MECHANISM FOR GRADUALLY AND SMOOTHLY VARYING ROTATIONAL SPEED BETWEEN A DRIVE MEMBER AND A DRIVEN MEMBER

(30) Priorité: 25.02.1992 FR 9202428
(43) Date de publication de la demande: 07.12.1994
(73) Titulaire: MARQUES, Jésus, José, Luis, F-06250 Mougins (FR)
(72) Inventeur: MARQUES, Jésus, José, Luis, F-06250 Mougins (FR)
(74) Mandataire: Bonneau, Gérard
(86) Numéro de dépôt international: FR9300188
(87) Numéro de publication internationale: WO9317260

(56) Documents cités:
- DE-A- 2 648 808
- FR-A- 2 218 005
- FR-E- 61 110
- US-A- 4 183 253

## Description

La présente invention concerne un mécanisme pour faire varier progressivement et sans à-coups la vitesse de rotation entre un organe moteur et un organe récepteur.

Il est parfois nécessaire de ne pas relier directement l'arbre moteur aux organes de transmission du mouvement. Ceci est d'autant plus vrai lorsqu'il s'agit d'un moteur à explosion qui ne peut démarrer en charge puisqu'il ne fournit un couple appréciable qu'à partir d'une certaine vitesse de rotation.

Le couple moteur maximum dont on dispose avec un moteur donné est sensiblement constant, alors que la résistance à vaincre pour assurer le mouvement peut varier continuellement. Dans le cas de l'automobile, il faut que la force motrice soit égale à la force résistante pour qu'elle se déplace à une allure déterminée. Le couple résistant variant continuellement avec le profil de la route, il serait intéressant que le rapport de démultiplication entre la vitesse de rotation du moteur et celle de l'arbre de transmission en suive proportionnellement les fluctuations, ce qui revient à avoir un changement de vitesse continu.

Pour faire varier le rapport de démultiplication, il est généralement utilisé : des boîtes de vitesses à trains d'engrenages différents pouvant être mis en jeu à volonté, des boites de vitesses à trains épicycloïdaux, des convertisseurs de couple ou bien encore des moyens de transmission par courroie.

L'utilisation de ces systèmes impose de changer fréquemment le rapport de démultiplication en fonction de la variation de l'effort résistant, ce qui fait varier le régime moteur et entraîne une consommation spécifique plus importante qu'à régime constant.

Il a été remédié partiellement à ces inconvénients en utilisant un mécanisme tel que décrit dans le brevet US-A-4.183.253. Un tel mécanisme comprend un tronc de cône de transmission de mouvement monté sur l'arbre solidaire de l'organe moteur, un tronc de cône de transmission de mouvement et un galet composé de deux troncs de cône opposés par les grandes bases et en contact chacun avec un des deux troncs de cône de transmission de mouvement. Malheureusement, la transmission du couple moteur se fait plus ou moins correctement selon la position du galet du fait du glissement entre le galet et les troncs de cône de transmission de mouvement en dehors de la position où le tronc de cône du galet a son sommet concourant avec le sommet du tronc de cône de transmission de mouvement avec lequel il est en contact.

Le mécanisme de l'invention est donc un mécanisme du type à troncs de cône tel que décrit dans le brevet US-A-4.183.253, caractérisé en ce que les génératrices des troncs de cône de transmission de mouvement montés sur les arbres menant et mené respectivement sont de forme concave et les génératrices des troncs de cône composant le galet sont convexes, en ce que le contact entre les troncs de cône est tel que le sommet de chacun des troncs de cône du galet est concourant avec l'un ou l'autre des sommets des troncs de cône de transmission de mouvement, la base de ceux-ci étant prise au milieu de la partie en contact avec le galet, et ce, quelle que soit la position du galet le long des génératrices sur lesquelles il se déplace en translation, et en ce que la variation de la position du galet sur les troncs de cône de transmission de mouvement est obtenue par pivotement du galet réalisé par un quelconque système de variation dans un sens ou dans l'autre de son axe vertical pour lui imprimer un mouvement de vissage sur les troncs de cône, et ainsi lui permettre de se mouvoir le long des génératrices des troncs de cône de manière à augmenter ou à réduire le rapport de démultiplication selon qu'il est incliné dans un sens ou dans l'autre.

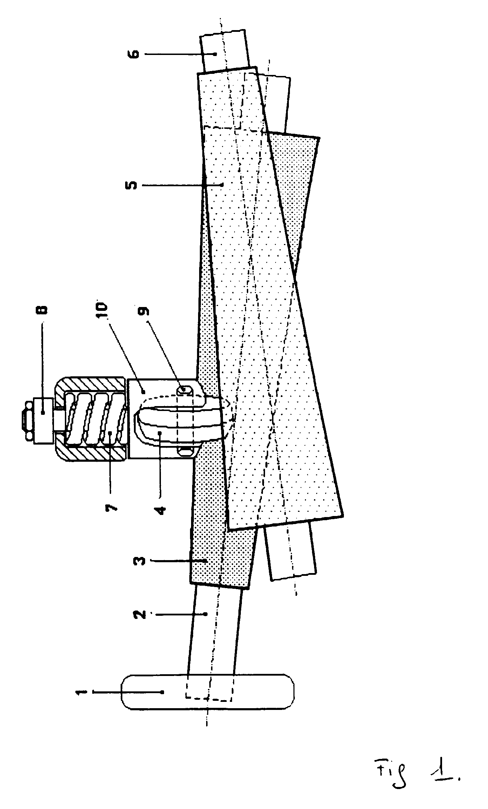

La figure 1 représente le mécanisme selon l'invention.

Le mécanisme représenté sur la figure 1 comporte un tronc de cône 3 fixé sur un arbre 2 entraîné en rotation par un organe moteur 1, et un tronc de cône 5 monté sur un arbre 6 relié aux organes de transmission du mouvement. Les troncs de cône 3 et 5, dont les génératrices forment des troncs coniques concaves, sont montés dans le sens opposé pour que la petite base de l'un puisse correspondre à la grande base de l'autre. La transmission du mouvement en rotation du tronc de cône 3 au tronc de cône 5 est assurée par un galet 4. Le galet 4 est composé de deux troncs de cône opposés dont les axes sont confondus et dont les génératrices forment des troncs coniques convexes.

L'adhérence du galet 4 sur les troncs de cône 3 et 5 est assurée par la force transmise par un organe de pression 7. le galet 4 peut se déplacer latéralement par l'intermédiaire d'un système de variation 8 lui permettant de coulisser le long des troncs de cône 3 et 5.

Au début de la phase de démarrage, le galet 4 a l'un de ses troncs de cône en contact avec le petit diamètre du tronc de cône moteur 3 alors que l'autre est en contact avec le grand diamètre du tronc de cône récepteur 5. Cette disposition correspond au rapport le plus court. L'organe de pression 7 doit fournir une force de pression suffisante pour obtenir une adhérence entre le galet 4 et les troncs de cônes 3 et 5 au moins égale au couple moteur, ceci au moyen de la fourche 10 à l'intérieur de laquelle est monté l'axe de rotation 9 du galet 4.

L'adhérence est améliorée par l'utilisation de matériaux à haut coefficient de frottement en surface des troncs de cône 3 et 5 et du galet 4.

L'utilisation des troncs de cône impose la nécessité d'avoir des sommets concourants pour chacune des positions du galet 4. Ceci est obtenu en donnant aux génératrices de chacun des troncs de cône 3 et 5 et du galet 4 un rayon de courbure particulier.

L'utilisation de formes concaves et convexes permet de déplacer le sommet des troncs de cône 3 et 5 le long de leurs axes respectifs tout en obtenant une concourance parfaite des sommets pour chacune des positions occupées par le galet 4.

Lorsque l'on veut augmenter la vitesse de rotation de l'arbre récepteur 6, il suffit de faire varier la position du galet 4 en le faisant coulisser le long des troncs de cône 3 et 5 par l'intermédiaire d'un système de variation 8. Le rapport de démultiplication varie progressivement pour passer du rapport le plus court au rapport le plus long et inversement.

Ce système permet le changement de vitesse continu sans nécessiter la variation du régime moteur qui peut alors être utilisé dans la plage de couple maximum. Il devient alors intéressant d'utiliser un moteur à couple élevé pour une consommation spécifique faible. Cette disposition permet d'obtenir des accélérations et des vitesses élevées, comparables à celles de groupes propulseurs plus puissants, tout en conservant le régime moteur dans une plage d'utilisation favorisant les faibles consommations. La longévité du moteur s'en trouve fortement accrue.

De même, la variation commandée du rapport de démultiplication par un système quelconque permet d'obtenir un frein moteur puissant dès que la pédale d'accélérateur est relâchée, ce qui augmente la longévité et l'efficacité du système de freinage. Ce système permet d'améliorer considérablement la sécurité.

Le mécanisme selon l'invention est particulièrement destiné aux véhicules automobiles.

## Revendications

1. Mécanisme de variation continue de la vitesse de rotation entre un organe moteur (1) et un organe récepteur, comprenant deux troncs de cône de transmission de mouvement, l'un des troncs de cône (3) étant monté sur un arbre menant (2) solidaire de l'organe moteur et l'autre tronc de cône (5) étant monté dans le sens inverse à celui du tronc de cône (3) sur un arbre mené (6) solidaire dudit organe récepteur ; et un galet (4) composé de deux troncs de cône opposés par les grandes bases, l'un de ceux-ci étant en contact avec le tronc de cône (3) monté sur ledit arbre menant et l'autre étant en contact avec le tronc de cône (5) monté sur ledit arbre mené, ledit galet pouvant se déplacer en translation le long de l'une des génératrices de chacun des troncs de cône (3 ou 5) pour faire varier la vitesse dudit arbre mené;
ledit mécanisme étant caractérisé en ce que
- les génératrices des troncs de cône (3 et 5) montés sur lesdits arbres menant et mené (2 et 6) respectivement sont de forme concave et les génératrices des troncs de cône composant ledit galet (4) sont convexes,
- le contact entre lesdits troncs de cône est tel que le sommet de chacun des troncs de cône dudit galet est concourant avec l'un ou l'autre des sommets des troncs de cône (3, 5), la base de ceux-ci étant prise au milieu de la partie en contact avec ledit galet, et ce, quelle que soit la position dudit galet le long des génératrices sur lesquelles il se déplace en translation, et
- la variation de la position dudit galet sur les troncs de cône (3, 5) est obtenue par pivotement dudit galet réalisé par un quelconque système de variation (8) dans un sens ou dans l'autre de son axe vertical pour lui imprimer un mouvement de vissage sur les troncs de cône (2, 5), et ainsi lui permettre de se mouvoir le long des génératrices des troncs de cône (3, 5) de manière à augmenter ou à réduire le rapport de démultiplication selon qu'il est incliné dans un sens ou dans l'autre.

2. Mécanisme selon la revendication 1, dans lequel la transmission d'un couple moteur entre ledit tronc de cône (3) monté sur l'arbre menant solidaire de l'organe moteur et ledit tronc de cône (5) monté sur l'arbre mené solidaire de l'organe récepteur, se fait par l'intermédiaire dudit galet (4) maintenu en contact de roulement sans glissement sur toute sa largeur avec lesdits troncs de cône (3 et 5) grâce à un moyen de pression (7) se trouvant dans ledit système de variation (8) et fournissant une force au moins égale à celle dudit couple moteur.

3. Mécanisme selon la revendication 2, dans lequel les surfaces desdits troncs de cône de transmission de mouvement (3, 5) et des troncs de cône composant ledit galet (4) comportent un matériau à haut coefficient de frottement.

## Patentansprüche

1. Mechanismus zur kontinuierlichen Drehzahlwandlung zwischen einem Antriebsorgan (1) und einem Empfangsorgan, bestehend aus zwei Kegelstümpfen für die Bewegungsübertragung, wobei einer der Kegelstümpfe (3) an einer mit dem Antriebsorgan verbundenen Antriebswelle (2) montiert ist und der andere Kegelstumpf (5) in umgekehrter Richtung zu derjenigen des Kegelstumpfs (3) auf einer mit dem besagten Empfangsorgan verbundenen angetriebenen Welle (6); und aus einer Rolle (4), bestehend aus zwei Kegelstümpfen, deren Grundlinien sich gegenüberliegen, wobei einer der beiden in Kontakt mit dem auf der besagten Antriebswelle montierten Kegelstumpf (3) steht und der andere mit dem auf der besagten angetriebenen Welle montieren Kegelstumpf (5), wobei sich die besagte Rolle parallel entlang einer der Erzeugenden der Kegelstümpfe (3 oder 5) verschieben kann, um die Drehzahl der besagten angetriebenen Welle zu wandeln;
wobei der Mechanismus dadurch gekennzeichnet ist, dass
- die Erzeugenden der jeweils auf der besagten Antriebswelle und angetriebenen Welle (2 und 6) montierten Kegelstümpfe (3 und 5) eine konkave Form aufweisen, und die Erzeugenden der die besagte Rolle (4) bildenden Kegelstümpfe konvex sind,
- der Kontakt zwischen den besagten Kegelstümpfen so beschaffen ist, dass der Gipfel jedes Kegelstumpfs der besagten Rolle mit dem einen oder andere Gipfel der Kegelstümpfe (3, 5) zusammenwirkt, deren Basis sich in der Mitte des mit der besagten Rolle in Kontakt stehenden Teils befindet, und zwar bei jeder beliebigen Position der besagten Rolle entlang der Erzeugenden, auf denen sie sich parallel verschiebt, und
- die Änderung der Position der besagten Rolle auf den Kegelstümpfen (3, 5) durch Drehen der besagten Rolle mittels eines beliebigen Wandlungssystems (8) erzielt wird, und zwar in der einen oder anderen Richtung ihrer senkrechten Achse, um ihr eine Schraubbewegung auf den Kegelstümpfen (2, 5) zu verleihen und ihr damit zu ermöglichen, sich entlang der Erzeugenden der Kegelstümpfe (3, 5) zu bewegen, um das Übersetzungsverhältnis je nach ihrer Neigung in die eine oder andere Richtung zu vergrössern oder zu verkleinern.

2. Mechanismus nach Anspruch 1, bei dem die Übertragung eines Antriebsmoments zwischen dem besagten, auf der mit dem Antriebsorgan verbundenen Antriebswelle montierten Kegelstumpf (3) und dem besagten, auf der mit dem Empfangsorgan verbundenen angetriebenen Welle montierten Kegelstumpf (5) über die besagte Rolle (4) erfolgt, die über ihre gesamte Breite mit den besagten Kegelstümpfen (3 und 5) in rollendem, schlupflosem Kontakt gehalten werden, und zwar anhand eines Druckmittels (7), das sich im besagten Wandlungssystem (8) befindet und eine Kraft liefert, die mindestens derjenigen des besagten Antriebsmoments entspricht.

3. Mechanismus nach Anspruch 2, bei dem die Oberflächen der besagten Kegelstümpfe für die Bewegungsübertragung (3,5) und der die besagte Rolle (4) bildenden Kegelstümpfe einen Werkstoff mit hohem Reibbeiwert enthalten.

## Claims

1. A mechanism for a continuous variation of the rotational speed between a driving member (1) and a driven member comprising two truncated cones for the movement transmission, one of the truncated cones (3) being mounted on a driving shaft (2) secured to the driving member and the other truncated cone (5) being mounted in the direction opposite the direction of the truncated cone (3) on a driven shaft (6) secured to said driven member ; and a roller (4) comprised of two truncated cones opposite with respect to their large bases, one of them being engaged with the truncated cone (3) mounted on said driving shaft and the other one being engaged with the truncated cone (5) mounted on said driven shaft, said roller being translationally movable along one generatrix of each truncated cone (3 or 5) in order to vary the driven shaft speed;
said mechanism being characterized in that :
- the generatrices of the truncated cones (3 and 5) mounted on said driving and driven shafts (2 and 6) respectively have a concave shape and the generatrices of truncated cones of said roller (4) have a convex shape,
- the contact between said truncated cones is such that the vertex of each truncated cone of said roller is converging with one or the other of the truncated cones (3, 5) vertices, the base of the latter ones being taken at the middle of the portion in contact with said roller, and this, whatever the roller position along the generatrices on which it is translationally moved, and
- the variation of the roller position on the truncated cones (3, 5) is obtained by revolving said roller achieved by any variation system (8) in one direction or the other of its vertical axis for it to have a screwing movement on truncated cones (3, 5), and thus enable it to be moved along the generatrices of truncated cones (3, 5) whereby an increase or decrease in the drive ratio is obtained according to which direction it is tilted.

2. The mechanism according to claim 1, wherein the transmission of a driving torque from the truncated cone (3) mounted on the driving shaft secured to the driving member to the truncated cone (5) mounted on the driven shaft secured to the driven member, is achieved by means of said roller (4) maintained in rolling contact without sliding on its whole width with said truncated cones (3 and 5) thanks to a pressure means (7) within said variation system (8) and providing a force at least equal to the driving torque one.

3. The mechanism according to claim 2, wherein the surfaces of said truncated cones (3, 5) for the movement transmission and the said truncated cones of said roller (4) include a material having a high friction coefficient.
